# EUROPÄISCHE PATENTSCHRIFT

(11) **EP 2 193 062 B1**
(45) Veröffentlichungstag und Bekanntmachung des Hinweises auf die Patenterteilung: **04.01.2012**
(21) Anmeldenummer: 08803518.3
(22) Anmeldetag: 02.09.2008
(51) Int. Cl.: B61D 27/00

(54) **VERFAHREN ZUM KÜHLEN EINES ENERGIESPEICHERS**
METHOD FOR COOLING AN ENERGY ACCUMULATOR
PROCÉDÉ DE REFROIDISSEMENT D'UN ACCUMULATEUR D'ÉNERGIE

(30) Priorität: 27.09.2007 DE 102007046368
(43) Veröffentlichungstag der Anmeldung: 09.06.2010
(73) Patentinhaber: Siemens Aktiengesellschaft, 80333 München (DE)
(72) Erfinder: ECKERT, Peter, 91058 Erlangen (DE); MEINERT, Michael, 91056 Erlangen (DE); RECHENBERG, Karsten, 91077 Dormitz (DE)
(86) Internationale Anmeldenummer: PCT/EP2008/061547
(87) Internationale Veröffentlichungsnummer: WO 2009/043667

(56) Entgegenhaltungen:
- EP-A- 1 031 451
- DE-A1- 10 328 582
- US-A- 2 589 453
- US-A- 5 937 664

## Beschreibung

Die Erfindung betrifft ein Verfahren zum Kühlen eines Energiespeichers in einem Schienenfahrzeug mit Luft.

Energiespeicher können in Schienenfahrzeugen für unterschiedliche Zwecke vorhanden sein. Insbesondere sind leistungsfähige Energiespeicher notwendig, um ein Schienenfahrzeug, beispielsweise eine Straßenbahn, zumindest streckenweise ohne Energiezufuhr von außen betreiben zu können. Streckenabschnitte ohne Oberleitung oder Stromschiene werden gewünscht, wenn eine Straßenbahn durch eine enge Straße oder durch eine Fußgängerzone geführt werden soll.

Bei einem Energiespeicher, besonders bei einem solchen leistungsfähigen Energiespeicher, wie er für das Betreiben einer Straßenbahn notwendig ist, kommt es durch innere Leistungsverluste zu einer Erwärmung des Energiespeichers. Dieser Wärmeeintrag führt zu einer Verkürzung der Lebensdauer des Energiespeichers.

Es ist bereits vorgeschlagen worden, einen Energiespeicher mit Luft oder mit Wasser zu kühlen. Beispielsweise sind aus der Offenlegungsschrift DE 103 28 582A1, aus der EP 1 031 451 A2 sowie aus der Patentschrift US 5,937,664 Verfahren zum Kühlen eines Energiespeichers in einem Elektrofahrzeug mit Luft bekannt. Bei den Elektrofahrzeugen handelt es sich um Personenkraftwagen, die beispielsweise durch ein Brennstoffzellensystem angetrieben sind und Batterien zur Speicherung elektrischer Energie aufweisen. Eine solche bekannte Kühlung ist jedoch nicht energieeffizient genug, wenn elektrisch und thermisch stark belastete Energiespeicher gekühlt werden sollen, die z. B. zur Energieversorgung einer Straßenbahn auf einer Strecke dienen sollen, die weder eine Oberleitung noch eine Stromschiene aufweist.

Der Erfindung liegt die Aufgabe zugrunde, ein Verfahren zum Kühlen eines Energiespeichers in einem Schienenfahrzeug anzugeben, das eine effektivere Kühlung als bisher ermöglicht.

Die Aufgabe wird gemäß der Erfindung dadurch gelöst, dass die Luft aus einem bereits gekühlten oder klimatisierten Raum des Schienenfahrzeuges direkt zum Energiespeicher geleitet wird.

Der Energiespeicher ist eine Kombination aus elektrischem und elektrochemischem Energiespeicher. Beispielsweise ist der Energiespeicher aus mehreren Einzelzellen aufgebaut. Der elektrische Energiespeicher ist beispielsweise ein Doppelschichtkondensator. Der elektrochemische Energiespeicher ist z.B. eine Batterie. Diese Batterie kann z.B. eine Bleibatterie, eine Nickel-Cadmium-Batterie, eine Nickel-Metallhydrid-Batterie oder eine Lithiumionenbatterie sein.

Mit dem Verfahren nach der Erfindung wird der Vorteil erzielt, dass die im Energiespeicher entstehende Wärme schnell und zuverlässig abgeführt wird, weil die zum Kühlen zugeführte Luft eine deutlich niedrigere Temperatur hat als die Umgebungsluft. Bedingt durch die bessere Kühlmöglichkeit werden die Leistungsfähigkeit und auch die Lebensdauer des Energiespeichers vorteilhaft deutlich vergrößert. Auch können vorteilhaft Energiespeicher verwendet werden, die elektrisch und thermisch stärker als bisherige Energiespeicher belastet sind.

Beispielsweise wird nur dann wenn die Temperatur im gekühlten oder klimatisierten Raum niedriger ist als die Außentemperatur die Luft aus diesem Raum direkt zum Energiespeicher geleitet. Anderenfalls wird Umgebungsluft zum Energiespeicher geleitet.

Damit wird der Vorteil erzielt, dass stets die kälteste zur Verfügung stehende Luft zum Kühlen Verwendung findet.

Der gekühlte oder klimatisierte Raum ist beispielsweise der Fahrgastraum oder der Fahrerstand im Schienenfahrzeug.

Das Verfahren nach der Erfindung kann in einer Straßenbahn, in einem Triebzug oder in einer Lokomotive eingesetzt werden. Als Schienenfahrzeug gilt dabei auch ein spurgeführtes gummibereiftes Fahrzeug.

Der Energiespeicher ist beispielsweise im Schienenfahrzeug oder außerhalb des Schienenfahrzeuges angeordnet.

Beispielsweise ist er auf dem Dach oder unter dem Boden des Schienenfahrzeuges angeordnet.

Beispielsweise wird die Luft durch eine Öffnung im Wagenkasten des Schienenfahrzeuges zum Energiespeicher geleitet. Auf diese Weise ist vorteilhaft sichergestellt, dass Luft aus dem Innenraum des Wagenkastens und zwar aus einem gekühlten oder klimatisierten Raum, der zum Beispiel entweder der Fahrgastraum oder der Fahrerstand ist, zum Kühlen der Energiespeicher verwendet wird. Die Öffnung kann sich in der Seitenwand, im Dach oder im Boden des Wagenkastens befinden.

Nach einem anderen Beispiel wird die Luft durch eine Öffnung im Faltenbalg des Schienenfahrzeuges zum Energiespeicher geleitet. Damit wird der Vorteil erzielt, dass die Luftdurchführung, zum Beispiel über einen flexiblen Schlauch, am Faltenbalg besonders einfach anzubringen ist.

Beispielsweise wird der Kühlvorgang durch eine Steuereinheit gesteuert oder geregelt. Dabei wird vorteilhaft nur soviel Kühlluft aus dem gekühlten oder klimatisierten Raum abgezogen, wie zur Kühlung der Energiespeicher unbedingt notwendig ist. Die Kühlung oder Klimatisierung des Fahrgastraumes oder des Fahrerstandes wird nicht beeinträchtigt. Der Energieaufwand für die Kühlung wird vorteilhaft minimiert.

Beispielsweise wird der Kühlvorgang durch mehrere dezentrale Einheiten der Steuereinheit gesteuert oder geregelt. Diese können im Fahrzeug verteilt angeordnet sein.

Beispielsweise wird die Luft durch nur eine Leitung zu mehreren Energiespeichern geleitet. Dadurch kommt man mit wenigen Luftleitungen aus. Es werden mehrere Energiespeicher nacheinander von der gleichen Kühlluft durchströmt.

Nach einem anderen Beispiel zweigen von einer Hauptluftleitung Zweigleitungen ab, die zu einzelnen Energiespeichern der mehreren Energiespeicher hinführen.

Die mehreren Energiespeicher sind beispielsweise im Schienenfahrzeug und/oder außerhalb des Schienenfahrzeuges angeordnet.

Beispielsweise sind sie auf dem Dach und/oder unter dem Boden des Schienenfahrzeuges angeordnet.

Mit dem Verfahren nach der Erfindung wird insbesondere der Vorteil erzielt, dass die im Energiespeicher entstehende Wärme besser als bisher möglich abgeführt wird. Das ist darauf zurückzuführen, dass bereits gekühlte Luft verwendet wird.

Durch die verbesserte Kühlmöglichkeit können auf gleichem Platz mehr Energiespeicher als bisher aufgestellt werden. Außerdem werden die Leistungsfähigkeit und die Lebensdauer der Energiespeicher durch die verbesserte Kühlung deutlich vergrößert.

## Patentansprüche

1. Verfahren zum Kühlen eines Energiespeichers, der eine Kombination aus einem elektrischen und einem elektrochemischen Energiespeicher ist, in einem Schienenfahrzeug mit Luft, wobei die Luft aus einem bereits gekühlten oder klimatisierten Raum des Schienenfahrzeuges direkt zum Energiespeicher geleitet wird.

2. Verfahren nach Anspruch 1,
**dadurch gekennzeichnet, dass** nur dann wenn die Temperatur im gekühlten oder klimatisierten Raum niedriger ist als die Außentemperatur die Luft aus diesem Raum direkt zum Energiespeicher geleitet wird und dass sonst Umgebungsluft zum Energiespeicher geleitet wird.

3. Verfahren nach einem der Ansprüche 1 oder 2,
**dadurch gekennzeichnet, dass** der gekühlte oder klimatisierte Raum der Fahrgastraum oder der Fahrerstand ist.

4. Verfahren nach einem der Ansprüche 1 bis 3,
**dadurch gekennzeichnet, dass** der Energiespeicher innerhalb oder außerhalb des Wagenkastens des Schienenfahrzeuges angeordnet ist.

5. Verfahren nach Anspruch 4,
**dadurch gekennzeichnet, dass** der Energiespeicher auf dem Dach oder unter dem Boden des Schienenfahrzeuges angeordnet ist.

6. Verfahren nach einem der Ansprüche 1 bis 5,
**dadurch gekennzeichnet, dass** der Energiespeicher aus mehreren Einzelzellen aufgebaut ist.

7. Verfahren nach einem der Ansprüche 1 bis 6,
**dadurch gekennzeichnet, dass** die Luft durch eine Öffnung im Wagenkasten des Schienenfahrzeuges zum Energiespeicher geleitet wird.

8. Verfahren nach einem der Ansprüche 1 bis 6,
**dadurch gekennzeichnet, dass** die Luft durch eine Öffnung im Faltenbalg des Schienenfahrzeuges zum Energiespeicher geleitet wird.

9. Verfahren nach einem der Ansprüche 1 bis 8,
**dadurch gekennzeichnet, dass** der Kühlvorgang durch eine Steuereinheit gesteuert oder geregelt wird.

10. Verfahren nach Anspruch 9,
**dadurch gekennzeichnet, dass** der Kühlvorgang durch mehrere dezentrale Einheiten der Steuereinheit gesteuert oder geregelt wird.

11. Verfahren nach einem der Ansprüche 1 bis 10,
**dadurch gekennzeichnet, dass** die Luft durch nur eine Leitung zu mehreren Energiespeichern geleitet wird.

12. Verfahren nach einem der Ansprüche 1 bis 10,
**dadurch gekennzeichnet, dass** von einer Hauptluftleitung Zweigleitungen abzweigen, die zu einzelnen Energiespeichern der mehreren Energiespeicher hinführen.

13. Verfahren nach einem der Ansprüche 11 oder 12,
**dadurch gekennzeichnet, dass** die mehreren Energiespeicher innerhalb und/oder außerhalb des Wagenkastens des Schienenfahrzeuges angeordnet sind.

14. Verfahren nach Anspruch 13,
**dadurch gekennzeichnet, dass** die mehreren Energiespeicher auf dem Dach und/oder unter dem Boden des Schienenfahrzeuges angeordnet sind.

## Claims

1. Method for cooling an energy accumulator in a rail vehicle with air, which energy accumulator is a combination of an electrical energy accumulator and an electrochemical energy accumulator, wherein the air is fed directly to the energy accumulator from a space in the rail vehicle which has already been cooled or air-conditioned.

2. Method according to Claim 1, **characterized in that** only if the temperature in the cooled or air-conditioned space is lower than the external temperature is the air from this space fed directly to the energy accumulator, and **in that** otherwise ambient air is fed to the energy accumulator.

3. Method according to Claims 1 or 2, **characterized in that** the cooled or air-conditioned space is the passenger compartment or the driver's cab.

4. Method according to one of Claims 1 to 3, **characterized in that** the energy accumulator is arranged inside or outside the car body of the rail vehicle.

5. Method according to Claim 4, **characterized in that** the energy accumulator is arranged on the roof or under the floor of the rail vehicle.

6. Method according to one of Claims 1 to 5, **characterized in that** the energy accumulator is constructed from a plurality of individual cells.

7. Method according to one of Claims 1 to 6, **characterized in that** the air is fed to the energy accumulator through an opening in the car body of the rail vehicle.

8. Method according to one of Claims 1 to 6, **characterized in that** the air is fed to the energy accumulator through an opening in the folding bellows of the rail vehicle.

9. Method according to one of Claims 1 to 8, **characterized in that** the cooling process is open-loop or closed-loop controlled by a control unit.

10. Method according to Claim 9, **characterized in that** the cooling process is open-loop or closed-loop controlled by a plurality of decentralized units of the control unit.

11. Method according to one of Claims 1 to 10, **characterized in that** the air is fed to a plurality of energy accumulators through just one line.

12. Method according to one of Claims 1 to 10, **characterized in that** branch lines, which lead to individual energy accumulators of the plurality of energy accumulators, branch off from a main air line.

13. Method according to one of Claims 11 or 12, **characterized in that** the plurality of energy accumulators are arranged inside and/or outside the car body of the rail vehicle.

14. Method according to Claim 13, **characterized in that** the plurality of energy accumulators are arranged on the roof and/or under the floor of the rail vehicle.

## Revendications

1. Procédé de refroidissement d'un accumulateur d'énergie qui est une combinaison d'un accumulateur d'énergie électrique et d'un accumulateur d'énergie électrochimique, dans un véhicule ferroviaire par de l'air dans lequel on envoie l'air d'un espace déjà refroidi ou climatisé du véhicule ferroviaire directement à l'accumulateur d'énergie.

2. Procédé suivant la revendication 1,
**caractérisé en ce que** l'on n'envoie l'air de cet espace directement à l'accumulateur d'énergie que lorsque la température dans l'espace refroidi ou climatisé est plus basse que la température extérieure et sinon on envoie de l'air ambiant à l'accumulateur d'énergie.

3. Procédé suivant l'une des revendications 1 ou 2,
**caractérisé en ce que** l'espace refroidi ou climatisé est le compartiment pour les passagers ou la cabine du conducteur.

4. Procédé suivant l'une des revendications 1 à 3,
**caractérisé en ce que** l'accumulateur d'énergie est disposé à l'intérieur ou à l'extérieur de la caisse du véhicule ferroviaire.

5. Procédé suivant la revendication 4,
**caractérisé en ce que** l'accumulateur d'énergie est disposé sur le toit ou sous le plancher du véhicule ferroviaire.

6. Procédé suivant l'une des revendications 1 à 5,
**caractérisé en ce que** l'accumulateur d'énergie est formé de plusieurs cellules individuelles.

7. Procédé suivant l'une des revendications 1 à 6,
**caractérisé en ce que** l'on envoie l'air à l'accumulateur d'énergie par une ouverture de la caisse du véhicule ferroviaire.

8. Procédé suivant l'une des revendications 1 à 6,
**caractérisé en ce que** l'on envoie l'air à l'accumulateur d'énergie par une ouverture du soufflet du véhicule ferroviaire.

9. Procédé suivant l'une des revendications 1 à 8,
**caractérisé en ce que** l'on commande ou on règle l'opération de refroidissement par une unité de commande.

10. Procédé suivant la revendication 9,
**caractérisé en ce que** l'on commande ou on règle l'opération de refroidissement par plusieurs unités décentralisées de l'unité de commande.

11. Procédé suivant l'une des revendications 1 à 10,
**caractérisé en ce que** l'on envoie l'air à plusieurs accumulateurs d'énergie par seulement un conduit.

12. Procédé suivant l'une des revendications 1 à 10,
**caractérisé en ce que** d'un conduit d'air principal bifurquent des conduits de bifurcation, qui mènent à des accumulateurs d'énergie individuels, des plusieurs accumulateurs d'énergie.

13. Procédé suivant l'une des revendications 11 ou 12, **caractérisé en ce que** les plusieurs accumulateurs d'énergie sont disposés à l'intérieur et/ou à l'extérieur de la caisse du véhicule ferroviaire.

14. Procédé suivant la revendication 13
**caractérisé en ce que** les plusieurs accumulateurs d'énergie sont disposés sur le toit et/ou sous le plancher du véhicule ferroviaire.
